# FASCICULE DE BREVET EUROPEEN

(11) **EP 4 105 767 B1**
(45) Date de publication et mention de la délivrance du brevet: **02.07.2025**
(21) Numéro de dépôt: 22179298.9
(22) Date de dépôt: 15.06.2022
(51) Int. Cl.: G06F 3/01, G06F 3/041, B60K 35/10, B60K 35/22, B60K 35/25

(54) **ACTIONNEUR HAPTIQUE ET SYSTÈME D'AFFICHAGE COMPRENANT UN TEL ACTIONNEUR**
HAPTISCHER AKTUATOR UND ANZEIGESYSTEM MIT DIESEM AKTUATOR
HAPTIC ACTUATOR AND DISPLAY SYSTEM COMPRISING SAID ACTUATOR

(30) Priorité: 16.06.2021 FR 2106384
(43) Date de publication de la demande: 21.12.2022
(73) Titulaire: Valeo Comfort and Driving Assistance, 94000 Créteil (FR)
(72) Inventeur: WANIR, Said, 94000 Créteil (FR); COTTAREL, Bruno, 94000 Créteil (FR); EL OUARDI, Nour Eddine, 94000 Créteil (FR); BETOULLE, Quentin, 94000 Créteil (FR)
(74) Mandataire: Delplanque, Arnaud

(56) Documents cités:
- EP-A2- 2 244 167
- CN-U- 208 337 281
- KR-A- 20100 063 322
- US-A1- 2018 059 794
- US-A1- 2020 363 872

## Description

### DOMAINE TECHNIQUE DE L'INVENTION

La présente invention concerne de manière générale les surfaces tactiles.

Elle concerne plus particulièrement un actionneur haptique.

L'invention trouve une application particulièrement avantageuse dans les écrans tactiles à retour de force.

Elle concerne également un système d'affichage comprenant un tel actionneur.

### ETAT DE LA TECHNIQUE

Dans de nombreux véhicules, l'ajustement des paramètres de conduite (tels que ceux relatifs aux systèmes de navigation ou au régulateur de vitesse) se fait par l'intermédiaire d'une surface tactile. Les surfaces tactiles conventionnelles présentes dans les véhicules peuvent également détecter, en plus de la position du doigt, la force exercée par ce dernier sur la surface. Cette caractéristique permet notamment d'empêcher le déclenchement intempestif de fonctions. Les surfaces tactiles conventionnelles peuvent aussi comprendre un retour haptique caractérisé par une sensation de vibration de la surface sous le doigt. La mesure de force peut aussi permettre de doser le retour haptique pour qu'il soit perçu le mieux possible par l'utilisateur.

En pratique, ces deux fonctions (mesure et retour haptique) sont réalisées par un même actionneur haptique.

Classiquement, cet actionneur haptique comprend un stator, une partie mobile et un moyen de rappel. La partie mobile est typiquement solidaire d'une surface tactile. Le stator, qui est fixe par rapport au tableau de bord du véhicule, peut attirer la partie mobile grâce au champ électromagnétique qu'il génère. Une fois le champ électromagnétique coupé, le moyen de rappel repousse alors la surface tactile (et donc partie mobile) vers sa position de référence. Le champ électromagnétique et le moyen de rappel permettent ainsi de réaliser la fonction de retour haptique tandis que la fonction de mesure est réalisée en mesurant, de façon inductive ou capacitive, le déplacement de la partie mobile par rapport au stator.

Avant d'être installé, c'est-à-dire fixé à la surface tactile, l'actionneur haptique doit être calibré pour déterminer la relation entre le déplacement de la partie mobile et la force exercée par l'utilisateur (fonction de mesure de l'actionneur) ainsi que la relation entre l'intensité du courant injecté dans le stator et la force exercée sur la partie mobile par le champ électromagnétique (fonction de retour haptique de l'actionneur). Cette calibration est réalisée pour une distance donnée, appelée distance de calibration, entre le stator et la partie mobile.

Cependant, une fois installé, il est fréquent que la distance de référence entre la partie le stator et la partie mobile soit différente de la distance de calibration. Cette différence peut être liée à un défaut de planéité de la surface tactile. Par exemple, si deux actionneurs sont situés à deux extrémités d'une surface tactile qui aurait due être plane, il se peut que la distance de référence soit inférieure à la distance de calibration pour l'un et que la distance de référence soit supérieure à la distance de calibration pour l'autre.

Cette différence entre la distance de référence et la distance de calibration fausse le fonctionnement de l'actionneur haptique. Par exemple, lorsque la distance de référence est inférieure à la distance de calibration, la force exercée par le stator sur la partie mobile pour une intensité injectée prédéterminée est plus grande que lors de la calibration. A l'inverse, lorsque la distance de référence est supérieure à la distance de calibration, la force exercée par le stator sur la partie mobile pour une intensité injectée prédéterminée est plus faible que lors de la calibration. Dans les deux cas, le retour haptique est inapproprié (vibration trop forte ou trop faible de la surface tactile) et/ou non-homogène sur l'ensemble de la surface tactile.

De même, la mesure de la force exercée par l'utilisateur (via le déplacement de la partie mobile) se retrouve faussée par cette différence entre la distance de référence et la distance de calibration. Cela a par exemple pour conséquence de modifier le seuil de déclanchement du retour haptique et de rentre le système trop sensible ou, à l'inverse, trop peu sensible.

Une solution peut alors consister à ajuster la position du stator, une fois installé, par rapport à son support (typiquement le tableau de bord du véhicule) pour que la distance de référence soit égale à la distance de calibration. Cette solution est peu satisfaisante car elle nécessite un réglage minutieux pour chaque actionneur haptique dans un espace qui est par ailleurs réduit. Un actionneur pour interface homme-machine est divulgué dans KR 2010 0063322 A.

### PRESENTATION DE L'INVENTION

Afin de remédier à l'inconvénient précité de l'état de la technique, la présente invention propose un actionneur haptique comprenant :
- un stator comprenant au moins un solénoïde apte à produire au moins un champ électromagnétique, le stator présentant une première extrémité et une seconde extrémité opposée à la premier extrémité ;
- une partie mobile comprenant une première surface et une seconde surface, la première surface s'étendant en regard de la première extrémité, la seconde surface s'étendant en regard de la seconde extrémité, la partie mobile étant conçue pour être déplacée par le au moins un champ électromagnétique par rapport au stator, la position relative de la première surface par rapport à la seconde surface étant fixe lorsque la partie mobile est déplacée ;
- un premier moyen de rappel placé entre la première surface et la première extrémité de manière à ramener, lorsque la partie mobile est déplacée par le au moins un champ électromagnétique, la partie mobile vers une positon de référence et un second moyen de rappel placé entre la seconde surface et la seconde extrémité de manière à ramener, lorsque la partie mobile est déplacée par le au moins un champ électromagnétique, la partie mobile vers la positon de référence.

Ainsi, grâce à l'invention, la calibration de l'actionneur effectuée avant son installation est encore valable après son installation. En pratique, il n'est donc plus nécessaire d'ajuster la distance de référence une fois l'actionneur haptique installé. L'utilisation d'une partie mobile comprenant deux surfaces sensibles au champ électromagnétique et situées de part et d'autre du solénoïde permet de compenser un changement position de la partie mobile à l'installation.

En effet, le retour haptique ainsi que la mesure de force sont tous deux calibrés en fonction de la somme de la distance entre la première surface et la première extrémité et de la distance entre la seconde surface et la seconde extrémité. Ainsi, lorsque la partie mobile n'est plus à la même position par rapport au stator après installation, cette somme des deux distances reste tout de même inchangée. Les relations déterminées lors de la calibration sont donc encore valables.

Pour la fonction de mesure, la force induite par l'utilisateur sur la surface est déterminée en fonction de la somme de la variation de capacité (ou d'inductance) induite par chacune des deux surfaces de la partie mobile. Ainsi, lorsque pour une force déterminée la variation de capacité ou d'inductance est plus grande pour la première surface une fois l'actionneur installé que lors de la calibration que lors de la calibration, la variation de capacité ou d'inductance est symétriquement plus faible pour la seconde surface. Pour une force déterminée, la somme de la variation de capacité ou d'inductance est ainsi identique à celle de la calibration.

Pour la fonction de retour haptique, lorsque la distance entre la première surface et la première extrémité est plus faible une fois l'actionneur installé que lors de la calibration, l'attraction exercée par le champ électromagnétique pour une intensité prédéterminée est plus grande. En contrepartie, puisque la distance entre la seconde surface et la seconde extrémité est alors plus grande, l'attraction exercée par le champ électromagnétique est donc symétriquement plus faible. Pour une intensité déterminée, la force moyenne induite par le champ électromagnétique sur la partie mobile est ainsi identique à celle de la calibration.

D'autres caractéristiques avantageuses et non limitatives de l'actionneur haptique conforme à l'invention, prises individuellement ou selon toutes les combinaisons techniquement possibles, sont les suivantes :
- la partie mobile comprend une partie de liaison traversant le stator, de la première extrémité à la seconde extrémité, et solidarisant la première surface et la seconde surface ;
- le au moins un solénoïde s'étend le long d'un axe longitudinal, dans lequel la partie de liaison s'étend le long de l'axe longitudinal de sorte que la partie mobile soit déplacée dans la direction de l'axe longitudinal ;
- la première surface et la seconde surface comprennent des aimants permanents ;
- le stator comprend un premier solénoïde apte à produire un premier champ électromagnétique destiné à attirer la première surface vers le stator et un second solénoïde apte à produire un second champ électromagnétique destiné à attirer la seconde surface vers le stator ;
- le stator comprend un circuit magnétique, réalisé dans un matériau à faible hystérésis, entourant le au moins un solénoïde ;
- la distance entre la première surface et la première extrémité et la distance entre la seconde surface et la seconde extrémité sont comprises entre 0,1 mm et 1,0 mm et de préférence entre 0,1 mm et 0,6 mm ;
- le premier moyen de rappel et/ou le second moyen de rappel comprennent une matrice chargée en particules magnétiques ;
- l'actionneur haptique comprend un premier circuit électrique conçu pour réaliser une mesure capacitive ou inductive de la distance entre la première surface et la première extrémité et un second circuit électrique conçu pour réaliser une mesure capacitive ou inductive de la distance entre la seconde surface et la seconde extrémité.

L'invention propose également un système d'affichage comprenant : une surface tactile ; une embase ; et un actionneur haptique tel que décrit ci-dessus, le stator étant fixé à l'embase et la partie mobile étant fixée à la surface tactile.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en coupe d'un actionneur haptique selon un premier mode de réalisation de l'invention ;
[Fig. 2] est une vue schématique en coupe d'un actionneur haptique selon un deuxième mode de réalisation de l'invention.

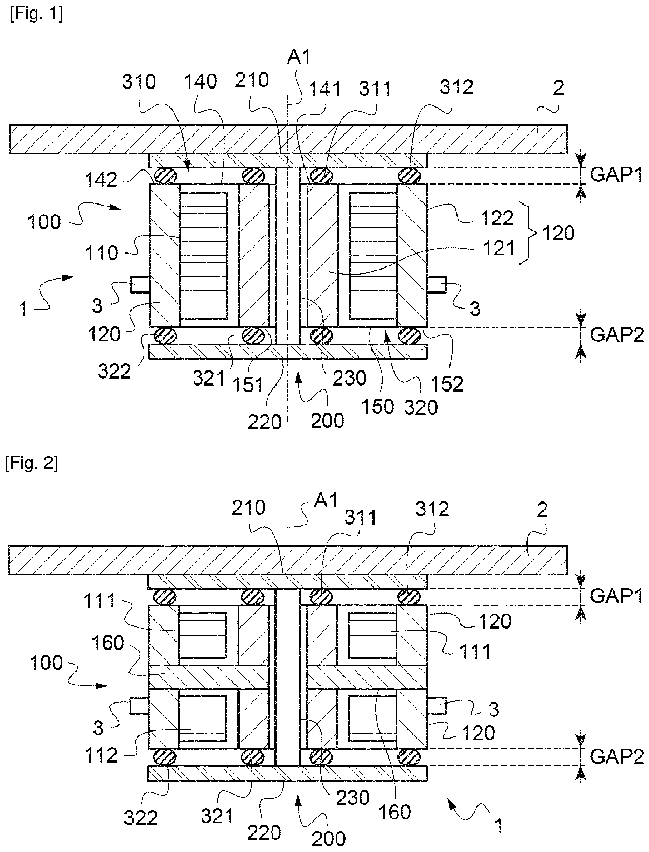

Sur les figures 1 et 2, on a représenté deux modes de réalisation d'un actionneur haptique 1. Dans ces deux modes de réalisation, il s'agit d'un actionneur haptique 1 pour surface tactile 2 comprenant un stator 100, une partie mobile 200 solidaire de la surface tactile 2, et des moyens de rappel 310, 320 interposés entre le stator 100 et la partie mobile 200. Le stator 100 est fixe par rapport à une embase 3 qui est par exemple le tableau de bord d'un véhicule.

Ainsi, les figures 1 et 2 illustrent un système d'affichage comprenant : la surface tactile 2 ; l'embase 3 ; et l'actionneur haptique 1 dans lequel le stator est fixé à l'embase 3 et la partie mobile 200 est fixée à la surface tactile 2. Ainsi, lorsque le stator 100 déplace la partie mobile 200, la surface tactile 2 se déplace pour suivre le déplacement de la partie mobile 200. Lorsqu'une partie de la surface tactile 2 est fixe (par rapport à l'embase 3), lorsque le stator 100 déplace la partie mobile 200, la surface tactile 2 se déforme pour suivre le déplacement de la partie mobile 200.

La surface tactile 2 peut par exemple être un écran à cristaux liquide par exemple de type transistor en couche mince (TFT de l'anglais « Thin Film Transistor »). Le système d'affichage peut être monté dans une configuration « rattachée » dans laquelle la surface tactile 2 est uniquement supportée par l'actionneur haptique 1 (ou par plusieurs actionneurs haptiques 1) ou dans une configuration « pseudo rattachée » dans laquelle la surface tactile 2 est en plus supportée par des éléments de maintien, tels que des joints en silicone, reliant par exemple la surface tactile 2 au tableau de bord du véhicule ou à l'embase 3.

Quel que soit le mode de réalisation, le stator 100 comprend au moins un solénoïde 110 apte à produire au moins un champ électromagnétique. Ici, le solénoïde 110 comprend un enroulage en spirale de fil électrique autour d'un axe longitudinal A1. Le solénoïde 110 présente ainsi une forme de cylindre creux autour de l'axe longitudinal A1. Lorsque le fil électrique est parcouru par un courant électrique, le solénoïde génère le champ électromagnétique.

Comme le montre par exemple la figure 1, le stator 100 comprend aussi un circuit magnétique 120 formant une enveloppe autour du solénoïde 110. Le circuit magnétique 120 comprend plus précisément une partie interne 121 et une partie externe 122. La partie interne 121, formant ici un cylindre creux, est située entre le solénoïde 110 et l'axe longitudinal A1 et s'entend le long de ce dernier. La partie externe 122, formant ici un cylindre creux, est située autour du solénoïde 110 et s'entend le long de l'axe longitudinal A1.

Ici, le circuit magnétique 120 est réalisé dans un matériau à faible hystérésis ce qui permet une annulation rapide du champ électromagnétique lorsque le courant électrique est coupé et ainsi une sensation de retour haptique plus nette.

Comme le montre la figure 1, la partie interne 121 et la partie externe 122 dépassent, ici de la même longueur, de part et d'autre du solénoïde 110 selon l'axe longitudinal A1. De préférence, comme illustré sur les figures 1 et 2, la partie interne 121 et la partie externe 122 sont séparées, c'est-à-dire disjointes, ce qui permet de canaliser le champ électromagnétique vers la partie mobile 200 et non pas de la partie interne 121 à la partie externe 122 du circuit magnétique 120.

Ainsi, le stator 100 présente une première extrémité 140 et une seconde extrémité 150 opposée à la première extrémité 140. Ici, la première extrémité 140 comprend une face supérieure 142 de la partie externe 122 et une face supérieure 141 de la partie interne 121. Ici, la seconde extrémité 150 comprend une face inférieure 152 de la partie externe 122 et par une face inférieure 151 de la partie interne 121. Comme illustrées sur les figures 1 et 2, la première extrémité 140 est orientée vers la surface tactile 2 et la seconde extrémité 150 est orientée à l'opposée de la surface tactile 2.

De façon générale, le stator 100 présente ici une symétrie de révolution autour de l'axe longitudinale A1.

La partie mobile 200 comprend une première surface 210 et une seconde surface 220. Ici, la première surface 210 est fixée à la surface tactile 2, par exemple par collage. Le déplacement de la surface tactile 2 entraine donc le déplacement de la première surface 210 et inversement.

Comme cela apparait sur les figures 1 et 2, la première surface 210 s'étend en regard de la première extrémité 140 du stator 100, c'est-à-dire ici en vis-à-vis à la fois de la face supérieure 142 de la partie externe 122 et de la face supérieure 141 de la partie interne 121 ; tandis que la seconde surface 220 s'étend en regard de la seconde extrémité 150 du stator 110, c'est-à-dire ici en vis-à-vis à la fois de la face inférieure 152 de la partie externe 122 et de la face inférieure 151 de la partie interne 121.

La première surface 210 et la seconde surface 220 présentent toutes deux ici une forme de disque de faible épaisseur (dimension selon l'axe longitudinal A1), par exemple de 0,5 mm à 2,0 mm.

La position relative de la première surface 210 par rapport à la seconde surface 220 est fixe. Cela signifie que le déplacement de la première surface 210 induit un déplacement identique de la seconde surface 220, et inversement.

Pour cela, quel que soit le monde de réalisation, la partie mobile 200 comprend une partie de liaison 230 reliant rigidement la première surface 210 et la seconde surface 220. La partie de liaison 230 permet ainsi de solidariser la première surface 210 et la seconde surface 220 et d'assurer que ces dernières soient fixe l'une par rapport à l'autre. La partie de liaison 230 est de préférence réalisée dans un matériau amagnétique pour ne pas perturber le fonctionnement de l'actionneur haptique 1.

Comme le montrent les figures 1 et 2, la partie de liaison 230 traverse le stator 100, c'est-à-dire passe à l'intérieur du stator 100, de la première extrémité 140 à la seconde extrémité 150. Ici la partie de liaison 230 traverse le stator 100 le long de l'axe longitudinal A1, Cela signifie que la partie de liaison 230 s'étend dans un évidement, ici un creux, prévu dans le stator 100. Ici, la partie de liaison 230 présente une forme de cylindre, de tube, ou de tige dont la longueur est (très) supérieure au diamètre.

De façon générale, la partie mobile 200 présente ici une symétrie de révolution autour de l'axe longitudinal A1.

En variante, la partie de liaison peut s'étendre à l'extérieur du stator, c'est-à-dire en périphérie de la partie externe du circuit magnétique. Par exemple la partie de liaison peut comprendre plusieurs extensions longitudinales réparties régulièrement en périphérie de la partie externe du stator.

Comme cela est décrit en détail dans chacun des deux modes de réalisation, la partie mobile 200 est conçue pour être déplacée par rapport au stator 100 par le champ électromagnétique. Ce déplacement de la partie mobile 200 se traduit donc par un déplacement identique de la partie de liaison 230, de la première surface 210 et de la seconde surface 220.

Ici, la partie de liaison 230 coulisse le long de l'axe longitudinal A1 lorsque la partie mobile 200 est déplacée. Cela est dû d'une part au fait que la partie de liaison 230 s'étende selon l'axe longitudinal A1 à travers le stator 100. D'autre part, cela est dû au fait que la force exercée par le champ magnétique sur la partie mobile 200 est orientée selon l'axe longitudinal A1.

Comme le montre les figures 1 et 2, les moyens de rappel comprennent ici un premier moyen de rappel 310 placé entre, c'est-à-dire interposée entre, la première surface 210 et la première extrémité 140, et un second moyen 320 de rappel placé entre la seconde surface 220 et la seconde extrémité 150. Cela signifie ici que chaque moyen de rappel est en contact avec le stator 100 d'un côté et avec la partie mobile 200 de l'autre.

Ces moyens de rappel 310, 320 sont ici des éléments élastiques qui sont par exemple réalisés dans un des matériaux suivants : le silicone, le caoutchouc, un polymère. De préférence, ils sont conçus en silicone. Le silicone est un matériau peu couteux et facile à mettre en forme. De plus ses propriétés, par exemple son module d'Young, peuvent être facilement ajustées.

En variante, ces moyens de rappel peuvent être des ressorts.

Le premier moyen de rappel 310 comprend ici un élément externe 312 situé entre la face supérieure 142 de la partie externe 122 et première surface 210 de la partie mobile 200 et un élément interne 311 situé entre la face supérieure 141 de la partie interne 121 et première surface 210 de la partie mobile 200.

De façon analogue, le second moyen de rappel 320 comprend ici un élément externe 322 situé entre la face inférieure 152 de la partie externe 122 et seconde surface 220 de la partie mobile 200 et un élément interne 321 situé entre la face inférieure 151 de la partie interne 121 et la seconde surface 220 de la partie mobile 200.

En variante, chaque moyen de rappel peut être d'un seul tenant, par exemple en forme de disque s'étendant de la partie externe à la partie interne du circuit magnétique et présentant un évidement central laissant passer la partie de liaison.

Ici, chaque élément 311, 312, 321, 322 présente une forme annulaire autour de l'axe longitudinal A1. Ici, la section de chaque élément 311, 312, 321, 322 dans un plan contenant l'axe longitudinal A1 est globalement circulaire. Les éléments 311, 312, 321, 322 sont ainsi globalement toriques (et appelés alors « o-rings » selon la terminologie anglo-saxonne).

En variante, les éléments peuvent présenter d'autres formes.

Ici, tous les éléments 311, 312, 321, 322 présentent la même épaisseur qui est définie comme leur dimension selon l'axe longitudinal A1.

De façon remarquable, les moyens de rappel 310, 320 sont ici chargés en particules magnétiques, par exemple réparties dans une matrice en silicone ou en caoutchouc ou en polymère, ce qui augmente leur perméabilité magnétique. Le champ électromagnétique circule alors plus efficacement du stator 100 à la partie mobile 200 ce qui améliore les performances de l'actionneur haptique 1.

Dans tous les cas, le premier moyen de rappel 310 et le second moyen de rappel 320 sont chacun placés de manière à ramener, lorsque la partie mobile 200 est déplacée par le champ électromagnétique, la partie mobile 200 vers une position de référence. La position de référence est ici la position de la partie mobile 200 lorsqu'elle n'est pas soumise au champ électromagnétique du solénoïde 110, c'est-à-dire lorsque que le solénoïde 110 n'est parcouru par aucun courant électrique. La position de référence est donc une position d'équilibre de l'actionneur haptique 1 lorsque ce dernier n'est pas en fonctionnement. Les moyens de rappel 310, 320 sont ainsi adaptés, de part leur propriétés élastiques, à repositionner la partie mobile 200 à la position de référence lorsque sa position est différente de la position de référence, c'est-à-dire lorsqu'elle se trouve hors équilibre. La position de référence de la partie mobile 200 est ici déterminée par la position relative de l'actionneur haptique 1 par rapport à la surface tactile 2 après installation.

Plus spécifiquement, le premier moyen de rappel 310 repousse la partie mobile 200 vers la position de référence lorsque la première surface 210 a été attirée vers le stator 100 par le champ électromagnétique. Le second moyen de rappel 320 repousse la partie mobile 200 vers la position de référence lorsque la seconde surface 210 a été attirée vers le stator 100 par le champ électromagnétique.

La combinaison de l'action du champ électromagnétique sur la partie mobile 200 et des moyens de rappel 310, 320 assure la fonction de retour haptique, c'est-à-dire de vibration de la surface tactile 2, de l'actionneur haptique.

La première extrémité 140 et la première surface 210 forment un entrefer définissant une première distance. Lorsque la partie mobile 200 est à sa position de référence, cette première distance est appelée « GAP1 ». La seconde extrémité 150 et la seconde surface 220 forment un entrefer définissant une seconde distance. Lorsque la partie mobile 200 est à sa position de référence, cette seconde distance est appelée « GAP2 ». A la position de référence, la première distance et la seconde distance, c'est-à-dire GAP1 et GAP2, sont par exemple comprises entre 0,1 mm et 1,0 mm, et de préférence entre 0,1 mm et 0,6 mm.

Dans les deux modes de réalisation, l'actionneur haptique 1 comprend un premier circuit électrique (non représenté) conçu pour réaliser une mesure capacitive ou inductive de la première distance. L'actionneur haptique 1 comprend un second circuit électrique (non représenté) conçu pour réaliser une mesure capacitive ou inductive de la seconde distance.

Pour une mesure de type capacitive, le premier circuit électrique et le second circuit électrique sont agencés entre le stator 110 et la partie mobile 200, respectivement entre la première extrémité 140 et la première surface 210 pour mesurer la première distance et entre la seconde extrémité 150 et la seconde surface 220 pour mesurer la seconde distance. Pour chaque distance, le stator 110 et la partie mobile 200 forment alors une paire d'électrodes se faisant face. Le premier circuit électrique permet alors de mesurer la capacité du condensateur constitué de la première extrémité 140 et la première surface 210. Respectivement, le second circuit électrique permet alors de mesurer la capacité du condensateur constitué de la seconde extrémité 150 et la seconde surface 220.

De même, pour une mesure de type inductive, le premier circuit électrique et le second circuit électrique sont connectés au solénoïde 110 pour mesurer l'inductance de ce dernier. La présence d'un corps conducteur, ici la partie mobile 200, dans le voisinage du solénoïde 110 modifie son inductance.

Des coefficients de calibration, décrits plus en détails ultérieurement, permettent de déterminer la première distance et la seconde distance en fonction des capacités ou des inductances mesurées. Une variation de la première distance, et donc une variation identique de la deuxième distance, permet, sur la base de coefficients de raideur des moyens de rappel 310, 320, de déterminer la force exercée par un utilisateur sur la surface tactile.

Le premier circuit électrique et le deuxième circuit électrique assurent ainsi la fonction de mesure de force de l'actionneur haptique 1.

On décrit maintenant en détail le premier mode de réalisation illustré par la figure 1. Ce premier mode de réalisation se caractérise par le fait que le stator 100 comprend un unique solénoïde 110 ce qui rend la fabrication de l'actionneur haptique relativement simple et peu coûteuse.

Dans ce premier mode de réalisation, la première surface 210 et la seconde surface 220 comprennent chacune un aimant permanent. Chaque aimant permanent constitue ici la majorité du volume de la première surface 210 et respectivement de la seconde surface 220, par exemple plus de 80% de leur volume.

Les pôles nord et sud des aimants permanents sont ici alignés avec l'axe longitudinal A1. L'aimant permanent de la première surface 210 présente la même orientation que l'aimant permanent de la seconde surface 220. Par exemple, le pôle Nord de chaque aimant permanent est orienté selon l'axe longitudinal A1 en direction de la surface tactile 2.

Ainsi, lorsque le champ magnétique circule dans un sens, la force exercée sur la premier surface 210 et la force exercée sur la seconde surface 220 sont orientées dans le même sens, ce qui permet déplacer la partie mobile 200. En inversant la polarité du champ électromagnétique, la partie mobile 200 est déplacée en sens inverse. La première surface 210 peut donc être attirée vers le stator 100 ou repoussée en fonction du sens de circulation du champ électromagnétique. Alterner la polarité du champ électromagnétique permet donc de faire vibrer la surface tactile 2.

La figure 2 illustre un deuxième mode de réalisation de l'actionneur haptique 1. L'idée de ce deuxième mode est de se passer d'aimants permanents qui nécessitent l'utilisation de terres rares et peuvent perdre leurs propriétés magnétiques dans le temps.

Ainsi, dans ce deuxième mode de réalisation, la première surface 210 et la seconde surface 220 sont réalisée en matériau ferromagnétique. Elles ne peuvent donc qu'être attirées par le champ électromagnétique (et pas repoussées).

C'est pourquoi le stator 100 comprend ici un premier solénoïde 111 et un second solénoïde 112 s'étendant en série le long de l'axe longitudinal A1. Comme le montre la figure 2, le stator comprend aussi deux circuits magnétiques 120, un entourant le premier solénoïde 111 et l'autre entourant le second solénoïde 112.

Comme cela apparait en figure 2, le stator 100 comprend aussi un séparateur 160 dont le rôle est d'isoler magnétiquement les deux solénoïdes 111, 112. Pour cela, le séparateur 160 est réalisé dans un matériau amagnétique. Ici, le séparateur 160 présente une forme de disque centré sur l'axe longitudinal A1 dont l'épaisseur (selon l'axe longitudinal A1) est inférieure au diamètre. Le séparateur 160 présente un évidement central traversé par la partie de liaison 230, et s'étend de la périphérie du stator 100 à la partie de liaison 230.

Pour exercer la fonction de retour haptique, le premier solénoïde 111 et le second solénoïde 112 fonctionnent, c'est-à-dire génèrent un champ électromagnétique, en alternance. Lorsque le premier solénoïde 111 génère un premier champ électromagnétique, la première surface 210 est attirée vers le stator 100 : la partie mobile 200 se déplace dans un sens. Ensuite, lorsque le second solénoïde 112 génère un second champ électromagnétique, la seconde surface 210 est attirée vers le stator 100 : la partie mobile 200 se déplace dans l'autre sens. Alterner l'alimentation des solénoïdes 111, 112 permet donc de faire vibrer la surface tactile 2.

On décrit maintenant l'effet d'auto-compensation de l'actionneur haptique 1, à la fois pour sa fonction de mesure de force et pour sa fonction de retour haptique. L'effet d'auto-compensation résulte ici de l'utilisation de deux surfaces magnétiques situées de part et d'autre du stator 100 : la première surface 210 et de la seconde surface 220. Grâce à cet effet d'auto-compensation, les relations déterminées lors de la calibration sont encore valables. Pour rappel, ces relations sont : la relation déplacement de la partie mobile - capacité ou inductance pour la fonction mesure de force ; la relation intensité du courant dans le solénoïde - force exercée sur la partie mobile pour la fonction de retour haptique.

On considère par la suite que l'actionneur haptique est calibré lorsque GAP1 est égal à GAP2 (comme représenté sur les figures 1 et 2), ce qui en pratique souvent le cas.

On décrit tout d'abord l'effet d'auto-compensation pour la fonction de mesure de force. Comme évoqué précédemment, mesurer la force de l'utilisateur sur la surface tactile 2 revient à mesurer le déplacement noté D de la partie mobile 200 par rapport au stator 100. Le déplacement se fait ici le long de l'axe longitudinal A1. On se place ici dans le cas d'une mesure capacitive mais l'effet est identique pour une mesure inductive.

Lorsque GAP1 est égal à GAP2, le déplacement D est déterminé par la formule suivante : D=α*(ΔC1+ΔC2) où ΔC1 est la variation de capacité entre la première surface 210 et la première extrémité 140 mesurée par le premier circuit, ΔC2 est la variation de capacité entre la seconde surface 220 et la seconde extrémité 150 mesurée par le second circuit et α un coefficient de proportionnalité déterminé en calibration. Puisque GAP1 est égal à GAP2, le coefficient α est à la fois le coefficient de proportionnalité entre la première distance et la capacité mesurée par le premier circuit et le coefficient de proportionnalité entre la première distance et la capacité mesurée par le premier circuit.

Lorsque GAP1 est différent de GAP2, ce qui peut fréquemment être le cas une fois l'actionneur haptique 1 installé, le déplacement D est déterminé par la formule suivante : D=α1*ΔC1+α2*ΔC2 où α1 et α2 sont deux coefficients de proportionnalité.

Toutefois, lorsque que GAP1 et GAP2 sont suffisamment proches, α1=α2=α. On entend ici par « suffisamment proches » par exemple que ni GAP1 ni GAP2 ne varie de plus de 50% par rapport à la situation de calibration où GAP1=GAP2. Ainsi, lorsque GAP1 et GAP2 sont égaux et valent 0,3 mm, on entend par « suffisamment proches » qu'une fois l'actionneur installé, GAP1 et GAP2 valent 0,3 mm plus ou moins 0,15 mm.

Dans ce cas, on a alors D=α*(ΔC1+ΔC2). De plus, les circuits électriques peuvent être réglés pour que la relation entre la distance et la capacité mesurée soit dans un régime linéaire. Les variations de capacité ΔC1 et ΔC2 se compensent alors de telle sorte que la somme ΔC1+ΔC2 dans le cas GAP1≠GAP2 soit égale à la somme ΔC1+ΔC2 dans le cas GAP1=GAP2.

Ainsi, la calibration de l'actionneur 1 réalisée dans le cas GAP1=GAP2 est encore valable dans le cas dans le cas GAP1≠GAP2 car l'erreur due à la variation de GAP1 lors de l'installation se compense avec l'erreur opposée due à la variation de GAP2 lors de l'installation. Plus on s'éloigne des conditions ci-dessus, plus l'effet d'auto-compensation diminue.

On décrit maintenant l'effet d'auto-compensation pour la fonction de retour haptique et en particulier pour le premier mode de réalisation. On notre F la force exercée par le champ électromagnétique sur la partie 200. Cette force est répartie entre une force F1 exercée sur la première surface 210 et une force F2 exercée sur la seconde surface 220. On a ainsi F=F1+F2.

Lorsque GAP1 est égal à GAP2 (comme en calibration) la force F exercée par le champ électromagnétique sur la partie 200 est équitablement répartie entre une force F1=F0/2 sur la première surface 210 et une force F2=F0/2 sur la seconde surface 220 avec F=F0.

Lorsque GAP1 est différent de GAP2, la force F n'est plus répartie équitablement et les forces F1 et F2 différent de F0/2. Par exemple, si GAP1<GAP2, on a alors F1=F0/2+Δ1 et F2=F0/2- Δ2.

Toutefois, lorsque que GAP1 et GAP2 sont suffisamment proches, la relation entre la première distance, respectivement la deuxième distance, et la force exercée par le champ électromagnétique sur la première surface 210, respectivement la seconde surface 220, peut être approximée par une relation linéaire.

On a alors Δ1= Δ2 et on retrouve, même lorsque GAP1≠GAP2, F=F1+F2=F0.

Ainsi, la calibration de l'actionneur 1, c'est-à-dire la détermination de la relation entre l'intensité du courant parcourant le solénoïde 110 et la force F exercée sur la partie mobile 200, réalisée dans le cas GAP1=GAP2 est encore valable dans le cas dans le cas GAP1≠GAP2 car l'erreur Δ1 due à la variation de GAP1 lors de l'installation se compense avec l'erreur Δ2 opposée due à la variation de GAP2 lors de l'installation. Plus on s'éloigne du régime linéaire ci-dessus, plus l'effet d'auto-compensation diminue.

Pour le deuxième mode de réalisation, l'effet d'auto-compensation apparait en considérant la force moyenne <F> exercée par les solénoïdes 111, 112, par exemple sur un cycle comprenant une activation de chaque solénoïde 111, 112.

La présente invention n'est nullement limitée aux modes de réalisation décrits et représentés, mais l'homme du métier saura y apporter toute variante conforme à l'invention.

## Revendications

1. Actionneur haptique (1) comprenant :
- un stator (100) comprenant au moins un solénoïde (110 ; 111, 112) apte à produire au moins un champ électromagnétique, le stator (100) présentant une première extrémité (140) et une seconde extrémité (150) opposée à la premier extrémité ;
- une partie mobile (200) comprenant une première surface (210) et une seconde surface (220), la première surface (210) s'étendant en regard de la première extrémité (140), la seconde surface (220) s'étendant en regard de la seconde extrémité (150), la partie mobile (200) étant conçue pour être déplacée par le au moins un champ électromagnétique par rapport au stator (100), la position relative de la première surface (210) par rapport à la seconde surface (220) étant fixe lorsque la partie mobile (200) est déplacée ;
- un premier moyen de rappel (310) placé entre la première surface (210) et la première extrémité (140) de manière à ramener, lorsque la partie mobile (200) est déplacée par le au moins un champ électromagnétique, la partie mobile (200) vers une positon de référence et un second moyen de rappel (320) placé entre la seconde surface (220) et la seconde extrémité (150) de manière à ramener, lorsque la partie mobile (200) est déplacée par le au moins un champ électromagnétique, la partie mobile (200) vers la positon de référence.

2. Actionneur haptique (1) selon la revendication 1, dans lequel la partie mobile (200) comprend une partie de liaison traversant le stator (100), de la première extrémité (140) à la seconde extrémité (150), et solidarisant la première surface (210) et la seconde surface (220).

3. Actionneur haptique (1) selon l'une des revendications 1 à 2, dans lequel le au moins un solénoïde (110 ; 111, 112) s'étend le long d'un axe longitudinal (A1), dans lequel la partie de liaison (230) s'étend le long de l'axe longitudinal (A1) de sorte que la partie mobile (200) soit déplacée dans la direction de l'axe longitudinal (A1).

4. Actionneur haptique (1) selon l'une des revendications 1 à 3, dans lequel la première surface (210) et la seconde surface (220) comprennent des aimants permanents.

5. Actionneur haptique (1) selon l'une des revendications 1 à 3, dans lequel le stator (100) comprend un premier solénoïde (111) apte à produire un premier champ électromagnétique destiné à attirer la première surface (210) vers le stator (100) et un second solénoïde (112) apte à produire un second champ électromagnétique destiné à attirer la seconde surface (220) vers le stator (100).

6. Actionneur haptique (1) selon l'une des revendications 1 à 5, dans lequel le stator (100) comprend un circuit magnétique (120), réalisé dans un matériau à faible hystérésis, entourant le au moins un solénoïde (110 ; 111, 112).

7. Actionneur haptique (1) selon l'une des revendications 1 à 6, dans lequel la distance entre la première surface (210) et la première extrémité (140) et la distance entre la seconde surface (220) et la seconde extrémité (150) sont comprises entre 0,1 mm et 1,0 mm.

8. Actionneur haptique (1) selon l'une des revendications 1 à 7, dans lequel le premier moyen de rappel (310) ou le second moyen de rappel (320) comprennent une matrice chargée en particules magnétiques.

9. Actionneur haptique (1) selon l'une des revendications 1 à 8, comprenant un premier circuit électrique conçu pour réaliser une mesure capacitive ou inductive de la distance entre la première surface (210) et la première extrémité (140) et un second circuit électrique conçu pour réaliser une mesure capacitive ou inductive de la distance entre la seconde surface (220) et la seconde extrémité (150).

10. Système d'affichage comprenant :
- une surface tactile (2) ;
- une embase (3) ; et
- un actionneur haptique (1) selon l'une des revendications 1 à 9,
le stator (100) étant fixé à l'embase (3) et la partie mobile (200) étant fixée à la surface tactile (2).

## Patentansprüche

1. Haptischer Aktuator (1), umfassend:
- einen Stator (100), der mindestens einen Elektromagneten (110; 111, 112) umfasst, der mindestens ein elektromagnetisches Feld erzeugen kann, wobei der Stator (100) ein erstes Ende (140) und ein zweites Ende (150) gegenüber dem ersten Ende aufweist;
- ein bewegliches Teil (200), das eine erste Oberfläche (210) und eine zweite Oberfläche (220) umfasst, wobei sich die erste Oberfläche (210) gegenüber dem ersten Ende (140) erstreckt, die zweite Oberfläche (220) sich gegenüber dem zweiten Ende (150) erstreckt, wobei das bewegliche Teil (200) so ausgelegt ist, dass es durch das mindestens eine elektromagnetische Feld relativ zu dem Stator (100) versetzt wird, wobei die relative Position der ersten Oberfläche (210) zu der zweiten Oberfläche (220) fest ist, wenn das bewegliche Teil (200) versetzt wird;
- ein erstes Rückstellmittel (310), das zwischen der ersten Oberfläche (210) und dem ersten Ende (140) angeordnet ist, um, wenn der bewegliche Teil (200) durch das mindestens eine elektromagnetische Feld versetzt wird, den beweglichen Teil (200) in eine Bezugsposition zurückzuführen, und ein zweites Rückstellmittel (320), das zwischen der zweiten Oberfläche (220) und dem zweiten Ende (150) angeordnet ist, um, wenn der bewegliche Teil (200) durch das mindestens eine elektromagnetische Feld versetzt wird, den beweglichen Teil (200) in die Bezugsposition zurückzuführen.

2. Haptischer Aktuator (1) nach Anspruch 1, bei dem das bewegliche Teil (200) ein Verbindungsteil umfasst, das den Stator (100) von dem ersten Ende (140) zu dem zweiten Ende (150) durchquert und die erste Oberfläche (210) und die zweite Oberfläche (220) fest miteinander verbindet.

3. Haptischer Aktuator (1) nach einem der Ansprüche 1 bis 2, wobei sich der mindestens eine Elektromagnet (110; 111, 112) entlang einer Längsachse (A1) erstreckt, wobei sich das Verbindungsteil (230) entlang der Längsachse (A1) erstreckt, so dass das bewegliche Teil (200) in Richtung der Längsachse (A1) versetzt wird.

4. Haptischer Aktuator (1) nach einem der Ansprüche 1 bis 3, wobei die erste Oberfläche (210) und die zweite Oberfläche (220) Permanentmagnete umfassen.

5. Haptischer Aktuator (1) nach einem der Ansprüche 1 bis 3, wobei der Stator (100) einen ersten Elektromagneten (111) umfasst, der ein erstes elektromagnetisches Feld erzeugen kann, das dazu bestimmt ist, die erste Oberfläche (210) in Richtung des Stators (100) anzuziehen, und einen zweiten Elektromagneten (112), der ein zweites elektromagnetisches Feld erzeugen kann, das dazu bestimmt ist, die zweite Oberfläche (220) in Richtung des Stators (100) anzuziehen.

6. Haptischer Aktuator (1) nach einem der Ansprüche 1 bis 5, wobei der Stator (100) einen Magnetkreis (120), der aus einem Material mit geringer Hysterese ausgeführt ist, umfasst, der den mindestens einen Elektromagneten (110; 111, 112) umgibt.

7. Haptischer Aktuator (1) nach einem der Ansprüche 1 bis 6, wobei der Abstand zwischen der ersten Oberfläche (210) und dem ersten Ende (140) und der Abstand zwischen der zweiten Oberfläche (220) und dem zweiten Ende (150) zwischen 0,1 mm und 1,0 mm betragen.

8. Haptischer Aktuator (1) nach einem der Ansprüche 1 bis 7, wobei das erste Rückstellmittel (310) oder das zweite Rückstellmittel (320) eine mit magnetischen Partikeln beladene Matrix umfasst.

9. Haptischer Aktuator (1) nach einem der Ansprüche 1 bis 8, umfassend einen ersten elektrischen Kreis, der dafür ausgelegt ist, eine kapazitive oder induktive Messung des Abstands zwischen der ersten Oberfläche (210) und dem ersten Ende (140) durchzuführen, und einen zweiten elektrischen Kreis, der dafür ausgelegt ist, eine kapazitive oder induktive Messung des Abstands zwischen der zweiten Oberfläche (220) und dem zweiten Ende (150) durchzuführen.

10. Anzeigesystem, umfassend:
- eine berührungsempfindliche Oberfläche (2);
- einen Sockel (3) und
- einen haptischen Aktuator (1) nach einem der Ansprüche 1 bis 9;
wobei der Stator (100) an dem Sockel (3) und das bewegliche Teil (200) an der berührungsempfindlichen Oberfläche (2) befestigt ist.

## Claims

1. Haptic actuator (1) comprising:
- a stator (100) comprising at least one solenoid (110; 111, 112) capable of producing at least one electromagnetic field, the stator (100) having a first end (140) and a second end (150) opposite the first end;
- a movable part (200) comprising a first surface (210) and a second surface (220), the first surface (210) extending facing the first end (140), the second surface (220) extending facing the second end (150), the movable part (200) being designed to be moved by the at least one electromagnetic field relative to the stator (100), the position of the first surface (210) relative to the second surface (220) being fixed when the movable part (200) is moved;
- a first return means (310) placed between the first surface (210) and the first end (140) so as to return, when the movable part (200) is moved by the at least one electromagnetic field, the movable part (200) towards a reference position and a second return means (320) placed between the second surface (220) and the second end (150) so as to return, when the movable part (200) is moved by the at least one electromagnetic field, the movable part (200) towards the reference position.

2. Haptic actuator (1) according to Claim 1, wherein the movable part (200) comprises a connecting part passing through the stator (100), from the first end (140) to the second end (150), and securing the first surface (210) and the second surface (220) to one another.

3. Haptic actuator (1) according to either of Claims 1 and 2, wherein the at least one solenoid (110; 111, 112) extends along a longitudinal axis (A1), wherein the connecting part (230) extends along the longitudinal axis (A1) such that the movable part (200) is moved in the direction of the longitudinal axis (A1).

4. Haptic actuator (1) according to one of Claims 1 to 3, wherein the first surface (210) and the second surface (220) comprise permanent magnets.

5. Haptic actuator (1) according to one of Claims 1 to 3, wherein the stator (100) comprises a first solenoid (111) capable of producing a first electromagnetic field intended to attract the first surface (210) towards the stator (100) and a second solenoid (112) capable of producing a second electromagnetic field intended to attract the second surface (220) towards the stator (100).

6. Haptic actuator (1) according to one of Claims 1 to 5, wherein the stator (100) comprises a magnetic circuit (120), produced from a material with low hysteresis, surrounding the at least one solenoid (110; 111, 112).

7. Haptic actuator (1) according to one of Claims 1 to 6, wherein the distance between the first surface (210) and the first end (140) and the distance between the second surface (220) and the second end (150) are between 0.1 mm and 1.0 mm.

8. Haptic actuator (1) according to one of Claims 1 to 7, wherein the first return means (310) or the second return means (320) comprise a matrix loaded with magnetic particles.

9. Haptic actuator (1) according to one of Claims 1 to 8, comprising a first electrical circuit designed to carry out a capacitive or inductive measurement of the distance between the first surface (210) and the first end (140) and a second electrical circuit designed to carry out a capacitive or inductive measurement of the distance between the second surface (220) and the second end (150).

10. Display system comprising:
- a touch surface (2);
- a base (3); and
- a haptic actuator (1) according to one of Claims 1 to 9,
the stator (100) being fastened to the base (3) and the movable part (200) being fastened to the touch surface (2).
